# EUROPEAN PATENT SPECIFICATION

(11) **EP 1 770 575 B1**
(45) Date of publication and mention of the grant of the patent: **25.08.2010**
(21) Application number: 05291874.5
(22) Date of filing: 09.09.2005
(51) Int. Cl.: G06F 21/04

(54) **System and method for scrambling keystrokes related to a password**
System und Verfahren zur Verschlüsselung von Tastenanschlägen bezüglich eines Passworts
Système et procédé de chiffrement de frappes de touche concernant un mot de passe

(43) Date of publication of application: 04.04.2007
(73) Proprietor: SAP AG, 69190 Walldorf (DE)
(72) Inventor: Gomez, Laurent, 06110 Le Cannet (FR); Hebert, Cedric, 06250 Mougins (FR); Ulmer, Cedric, 06000 Nice (FR); Spadone, Pascal, 06600 Antibes (FR)

(56) References cited:
- US-A- 5 841 868
- US-A- 6 134 661
- US-A1- 2003 041 251

## Description

### Technical Field

The invention relates generally to the field of electronic data processing and more specifically to security of passwords.

### Background and Prior Art

These days, more and more people use a growing number of computer systems. The use of the computer systems has advanced in the business world as well as in the private domain. Frequently, a computer system runs an application program that provides an application to a user. Many applications are provided by a remote computer system that the user accesses through a personal device. The personal computer system may be, for example, a personal computer, a laptop, or a personal digital assistant. The remote computer system may be, for example, an application server or a web application server. The remote computer system and the personal computer system may be connected for example through an intranet of an enterprise or through the Internet.

Frequently, applications require that the user has an authorization to access the application. Such an access control may for example request that the user enters a user identification and a password. In such cases, the application can check with the user identification that the user has been given the authorization to access the application. Furthermore, the application can verify the identity of the user by checking that the password is associated to the user identification. Such verification may for example assume an integrity of the password, that is, the access control may provide security as long as only the authentic user knows the password.

A further party without an authorization to access the application may be interested in accessing the application. The further party may use legal or illegal ways to gain the access. Therefore, there is a general and ongoing desire to increase the security of the access control.

United States Patent, patent number 6,134,661, discloses an apparatus encrypting a password that a user enters and using the encrypted password for accessing a computer network. The apparatus may be part of a keyboard or placed between a keyboard and a computer. The encrypted password is more difficult to guess by an unauthorized person than a password that Is entered by the user.

### Summary of the Invention

A possible way to overcome the access control of the application is to obtain the password of the authentic user when the user enters the password on an input device. This may involve spying or eavesdropping on the user, for example, by using a hidden camera recording the keystrokes on a keyboard when the user types in the password. A further example is using an advanced acoustic recorder allowing for an analysis of keystrokes. A further example is using a key catcher device that may be plugged between the keyboard and the personal computer system to record the keystrokes of the user.

It is desired to provide security against obtaining the password from the authentic user when the user enters the password on the input device.

A first embodiment of the invention is a system for scrambling characters of the password. The system includes a keystroke controller identifying keystrokes related to the password and a scrambling pad scrambling a character of the password. The system provides the security against obtaining the password through keystrokes of the user because the password that the user enters is different from the scrambled password that the application requests for an access. A high level of security is provided because knowledge of the entered password and further knowledge of a scrambling procedure leads to the requested scrambled password. Therefore, the user can protect the scrambled password by protecting the scrambling procedure, that is, the system for scrambling the password characters. Knowledge of the scrambling procedure alone is also not sufficient to break the requested scrambled password. A further level of security is provided because frequently a scrambled password is more difficult to guess by an unauthorized party than a meaningful password selected by the user. Furthermore, an additional security is provided because the user can select a password that is easy to memorize without writing down the password allowing for a detection of the written password. The first embodiment is disclosed in independent claim 1.

A second embodiment is a method for scrambling characters of the password. The method includes identifying a keystroke related to the password and scrambling a character represented by the keystroke. The method provides levels of security that correspond to levels of security of the first embodiment. The second embodiment is disclosed in independent claim 4.

A third embodiment is a computer program product referring to features of the second embodiment. Accordingly, the computer program product shares desired security aspects with the second embodiment. The third embodiment is disclosed in independent claim 6.

### Brief Description of Drawings

Fig. 1 is an exemplary system for scrambling characters of a password for an application.

Fig. 2 shows a few results of an exemplary transformation rule.

Fig. 3A is a sequence diagram of an exemplary first scrambling of a password.

Fig. 3B is a sequence diagram of an exemplary scrambling of a character of a password.

Fig. 3C is a sequence diagram showing a keystroke without a scrambling procedure.

Fig. 4A shows method steps according to an embodiment of the invention.

Fig. 4B shows further method steps according to the embodiment of the invention.

### Detailed Description of the Invention

The following examples and exemplary embodiments may have specific features for illustrative purposes. The specific features are not intended to limit or the scope of the invention or to be exhaustive regarding embodiments of the invention.

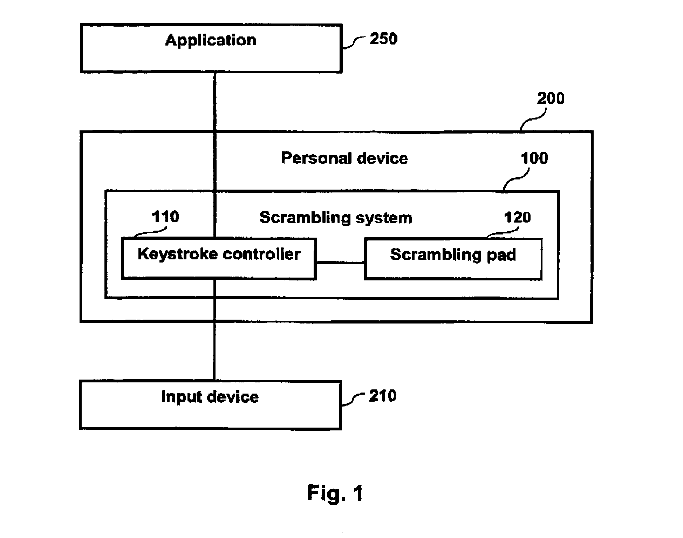

Fig. 1 is an exemplary system 100 for scrambling characters of a password for an application 250. In the figure, a line between two elements represents a communicative coupling for exchange of data between the two elements. The scrambling system 100 is a part of a personal device 200. The application 250 is provided by an application program running for example on a remote computer system or on the personal device 200. The characters of the password are entered by a user on an input device, for example, a keyboard 210. A further example for the input device may be a device with two or more keys to enter a password. The keys of the further example may represent numbers or different symbols and a password may be a sequence of keystrokes.

The scrambling system 100 includes a keystroke controller 110 configured to identify a keystroke that represents a character of the password entered on the keyboard 210. The scrambling system further includes a scrambling pad 120 configured to scramble the character represented by the identified keystroke into a scrambled character according to a transformation rule. The scrambling system 100 may for example be an external device that is configured to establish a connection to computer systems of one or more types. This may for example involve a standard interface provided by the computer systems through which the scrambling system has an access on a keystroke flow.

The personal device 200 may for example be a personal computer or a laptop that provides an interface for the scrambling system 100. Such an interface may be for example a slot of the personal computer and the scrambling system may be a plug in card. Further examples for the interface are a universal serial bus (USB) or a small computer system interface (SCSI) that allow for a connection with the scrambling system 100 through a corresponding interface. Through the interface the scrambling system 100 may become a part of the personal computer system and may have an access on the keystroke flow from the keyboard. Furthermore, the scrambling system has an access to data of the personal computer system that allow for an identification of keystrokes that are related to the password. A control of the keystroke flow from the keyboard to the application by the keystroke controller is represented by lines between the keyboard, the keystroke controller and the application. The identified keystroke is transmitted to the scrambling pad and the scrambling pad sends the scrambled keystroke to the keystroke controller through an interface. In a further example, the scrambling pad may also send the scrambled keystroke to the application.

In the example, the scrambling pad 120 of the scrambling system is further configured to generate the transformation rule for the password prior to scrambling a first character of the password. In case that the keystroke controller identifies a first keystroke related to a new password that has not been scrambled previously the scrambling pad may generate the transformation rule for the new password. Following a generation of the transformation rule the first character represented by the first keystroke may be scrambled. In an example, the generation of the transformation rule may be done following a last keystroke related to the new password. The system 100 may identify the last keystroke by the fact that it is followed by a keystroke that confirms the entering of the password such as the "return" key of the keyboard. In the example, the system may withhold the characters related to the new password and transmit the scrambled characters to the application following the generation of the transformation rule. In a further example, the generation of the transformation rule may be done following the first keystroke. Following this the scrambled character is transmitted to the application prior to identifying a further keystroke related to the password.

In the example, a scrambling of a character of a password can be deactivated by the user. Therefore, the user can select if a password is scrambled. It may be desired that the user enters an unscrambled password, for example, in case that the user is given an initial password that may not be changed when entered for the first time.

The keystroke controller is further configured to identify an application program for which the password is entered and the scrambling pad is further configured to apply a transformation rule that is associated to the identified application program. Therefore, the exemplary system scrambles the password for the application 250 with the transformation rule which may be different from a further transformation rule for used for a further application. This provides additional security because even in case that an unauthorized party discovers the transformation rule related to the application the unauthorized party cannot use the transformation rule for accessing the further application.

In the example, the transformation rule associated to the application complies with a restriction for scrambled characters of the password. The restriction may be required by the application. An example for the restriction is that the requested password contains at least one number. A further example is that the requested password contains a capital letter. Such restrictions may be requested in order to force the user to select a more complicated and therefore secure password. An application may also request that the password fulfills more than one restriction. In such cases the transformation rule is generated so that the one or more restrictions are fulfilled by the scrambled password.

In the example, the scrambling system 100 is stored on a portable storage device. The portable storage device has the interface to connect to the personal computer system. The user can use the scrambling system for different computer systems and by carrying the scrambling system personally the user can make the scrambling system more secure. The reason is that an unauthorized person may have to take the scrambling system away from the user for accessing the application.

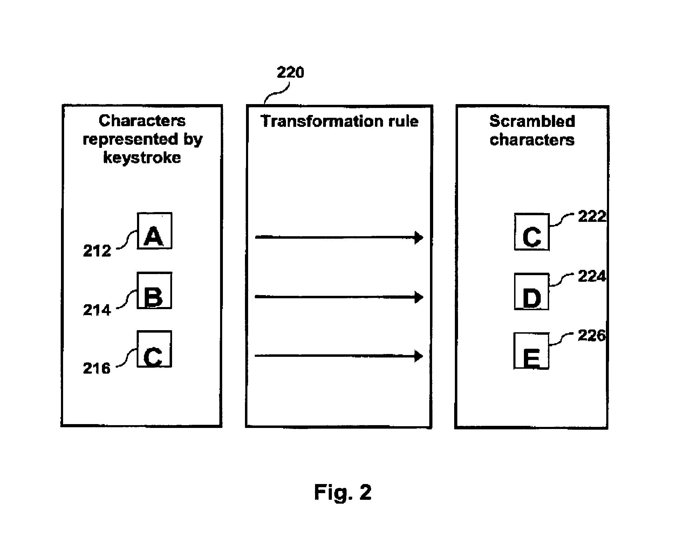

Fig. 2 shows a few results of an exemplary transformation rule 220. The exemplary transformation rule 220 substitutes a character according to a position in the alphabet by a character two positions later. The second last character and the last character of the alphabet are substituted by the first character and second character of the alphabet. The exemplary transformation rule 220 is an example for a shift transformation or a homophonic substitution. According to the exemplary transformation rule, the character 212 which is entered by the user is scrambled to the scrambled character 222. Similarly, character 214 is mapped to scrambled character 224 and character 216 is mapped to scrambled character 226. A mapping of the characters 212-216 represented by keystrokes to the scrambled characters 222-226 may use for example a mapping table with 2 columns. One column includes the characters 212-216 represented by keystrokes and a further column includes the scrambled characters 222-226. In a further example, the mapping may use an instruction how to shift the characters 212-216 represented by keystrokes to get to the scrambled characters 222-226.

The exemplary transformation can be extended by shifting elements of the "American Standard Code for Information Interchange" (ASCII). Furthermore, the number of positions by which a character is shifted may be changed. In further transformation rules the characters represented by keystrokes may be mapped by a permutation to the scrambled characters. The number of possible permutations is large also for a restricted set of characters. Furthermore, a transformation rule may also map different characters on a single scrambled character.

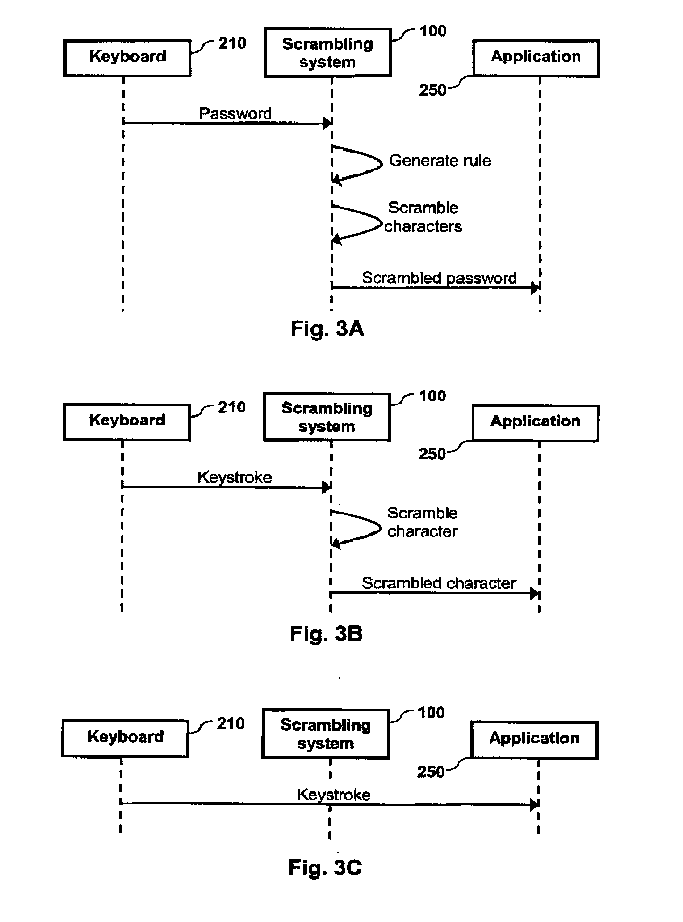

Fig. 3A is a sequence diagram of an exemplary first scrambling of a password. On the keyboard 210, the user enters keystrokes related to a password for the application 250. The scrambling system 100 withholds the characters represented by the entered keystrokes within the scrambling system so that the transformation rule can be generated prior to scrambling the characters. The transformation rule may for example be generated by selecting an integer and shifting each character by the integer using a shift transformation (see Fig. 2). The integer can be selected in a random-like way or from a predefined set of integers. A permutation for mapping characters to scrambled characters may be generated for example by mapping each character of a sequence to a free scrambled character. The free scrambled character is a scrambled character to which no character of the sequence has been mapped previously. Following scrambling the characters the scrambled password, that is, the password with the scrambled characters is transmitted to the application. The application may accept the scrambled password as a new password and request at future accesses the scrambled password as a proof of authentication. In order to change the password of the application a new transformation rule may be generated according to the exemplary first scrambling. In a further example, a change of the password may be done according to the generated transformation rule.

Fig. 3B is a sequence diagram of an exemplary scrambling of a character of a password. The situation is similar to Fig. 3A but the user enters a keystroke related to a password that has been scrambled previously. In the figure, the character represented by the keystroke is scrambled individually and the scrambled character is transmitted to the application. The sequence diagram may be repeated for each keystroke representing a character of the password. Following receiving the last scrambled character of the password the application can compare the scrambled characters with the characters of the password from the first scrambling and therefore authenticate the user.

Fig. 3C is a sequence diagram showing a keystroke without a scrambling procedure. A reason may for example be that the keystroke does not represent a character of a password. A further reason may be that the scrambling procedure is deactivated. According to the sequence diagram the character represented by the keystroke is directly, that is, with a small delay transmitted to the application. Therefore, the scrambling system hardly affects the personal device in case that keystrokes unrelated to a password are entered.

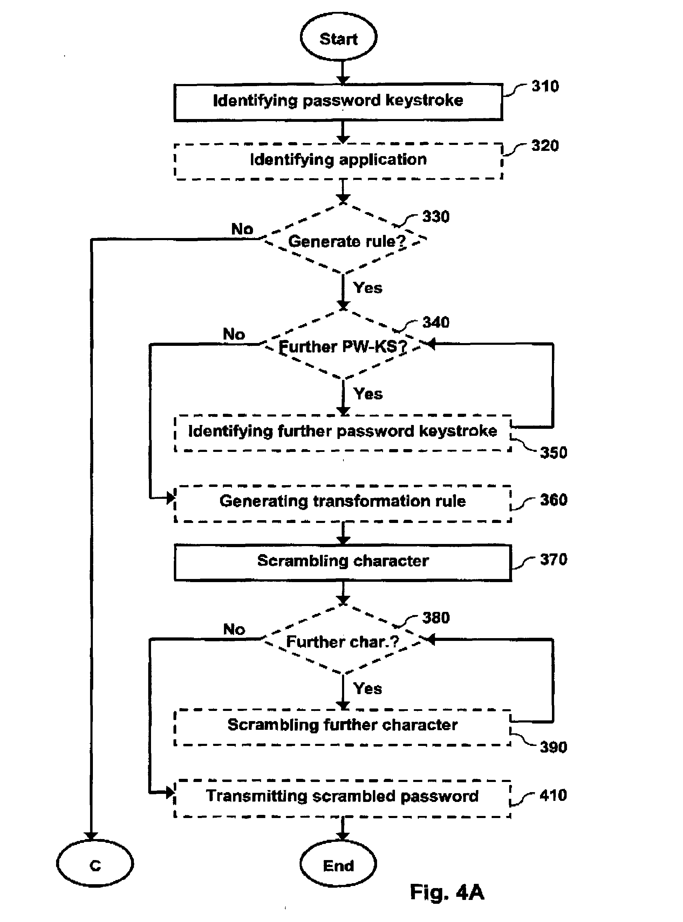

Fig. 4A shows method steps according to an embodiment of the invention. The method steps are from a computer implemented method 300 for scrambling characters of a password entered by a user on the input device. The computer implemented method includes identifying 310 the keystroke that represents the character of the password. Identifying 310 the keystroke may for example include controlling a flow of keystrokes, In an example, the method 300 may be used for a web based application. Generating the password can be executed on the client side or on a server side. In case of the web based application a password field can be identified by identifying a tag of the following structure in the HyperText Markup Language (HTML) page: <INPUT Type='password'>. Furthermore, the method may be implemented as a plug in for a web browser and control the flow of keystrokes.

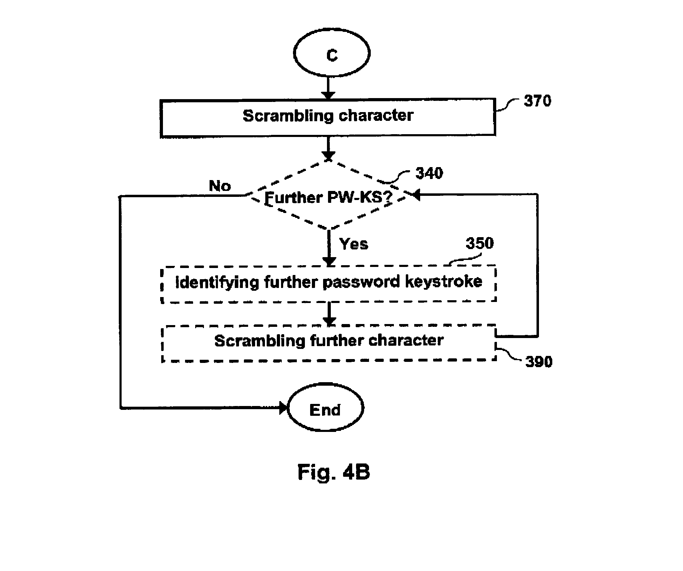

The method further includes scrambling 370 the character represented by the identified keystroke into a scrambled character according to a transformation rule. In the example, there are further method steps that are optional and that are indicated by dashed lines. The scrambling 370 can be executed for a first password scrambling following optional step generating 360 the transformation rule. The scrambling 370 can also be executed following a check 330 if a transformation rule is to be generated and in case that the check 330 has a negative result (see Fig. 4B). After the step identifying 310 the keystroke follows step identifying 320 the application program for which the password is entered. Accordingly, the transformation rule is associated to the identified application program, that is, has been generated specifically for the application or is intended to be generated specifically for the application. It follows the check 330 if the transformation rule is to be generated and in case of a positive result it follows a check 340 if a further keystroke related to the password has been entered. In case of a positive result it follows identifying 350 the further keystroke representing a further character of the password. In the example, step identifying 350 the further keystroke is repeated as long as the check 340 gives a positive result.

After a last password keystroke has been entered, that is, the check 340 for the password keystroke gives a negative result step generating 360 the transformation rule for the password is executed. In accordance with an embodiment of the invention generating 360 is executed following identifying 310 the keystroke. In a further example, step identifying a restriction for scrambled characters of the password may be executed prior to generating 360 the transformation rule. Accordingly, in the further example the transformation rule is generated so that the restriction is fulfilled.

In the figure follows scrambling 370 the character and a check 380 if further characters of the password are to be scrambled. In case of a positive result it follows scrambling 390 the further character into a further scrambled character according to the transformation rule. In the example, step scrambling 390 the further keystroke is repeated as long as the check 380 gives a positive result. In case of a negative result it follows transmitting 410 the scrambled password, that is, transmitting the scrambled characters of the password.

Fig. 4B shows further method steps according to the embodiment of the invention. The further method steps are executed in case that the result of the check 330 is negative, that is, the transformation rule has been generated previously. Accordingly, it follows scrambling 370 the character represented by the identified keystroke and the check 340 if further password keystrokes are entered. In case of a positive result steps identifying 350 the further keystroke and scrambling 390 the further character are executed and repeated as long as the check gives a positive result.

The method steps of the method 300 may be executed in a sequence that differs from a sequence depicted in Fig. 4A and Fig. 4B. In a further embodiment, step scrambling 370 the character may be executed prior to identifying 350 the further password keystroke. A person skilled in the art may find further sequences of the method steps that are in accordance with the invention.

A further embodiment of the invention is a computer program product comprising instructions that are transferable to a computer system and that cause the computer system to execute method steps of any one of the method 300 claims 7 to 12. The computer program product may be for example a USB stick, a floppy disc, or a compact disc (CD). Such portable storage devices allow the user to profit from the method on different computer systems. In an exemplary embodiment of the method the method may be executable only from the portable storage device. Therefore, after removing the portable storage device from the computer system the method may be inaccessible for execution.

Generally, the computer program product may include RAM, ROM, EPROM, EEPROM, CD-ROM or other optical disk storage, magnetic disk storage or other magnetic storage devices, or any other medium that may be used to carry or store desired program code in the form of computer-executable instructions or data structures and which can be accessed by a general purpose or special purpose computer. When information is transferred or provided over a network or another communications connection (either hardwired, wireless, or a combination of hardwired or wireless) to a computer, the computer properly views the connection as a computer-readable medium. Thus, any such connection is properly termed a computer-readable medium, that is, a computer program product. Combinations of the above are also to be included within the scope of computer-readable media. Computer-executable instructions include, for example, instructions and data which cause a general purpose computer, a special purpose computer, or a special purpose processing device to perform a certain function or group of functions. Furthermore, computer-executable instructions include, for example, instructions that have to be processed by a computer to transform the instructions into a format that is executable by a computer. The computer-executable instructions may be in a source format that is compiled or interpreted to obtain the instructions in the executable format.

The personal computer system may include a general purpose computing device in the form of a conventional computer, including a processing unit, a system memory, and a system bus that couples various system components including the system memory to the processing unit. The system memory may include read only memory (ROM) and random access memory (RAM). The computer may also include a magnetic hard disk drive for reading from and writing to a magnetic hard disk, a magnetic disk drive for reading from or writing to a removable magnetic disk, and an optical disk drive for reading from or writing to removable optical disk such as a CD-ROM or other optical media. The drives and their associated computer-readable media provide nonvolatile storage of computer-executable instructions, data structures, program modules and other data for the computer.

Software and web implementations of the present invention could be accomplished with standard programming techniques with rule based logic and other logic to accomplish the various database searching steps, correlation steps, comparison steps and decision steps. It should also be noted that the word component as used herein and in the claims is intended to encompass implementations using one or more lines of software code, and/or hardware implementations, and/or equipment for receiving manual inputs.

## Claims

1. A system (100) for scrambling characters of a password for a web based application, the password being entered by a user on an input device (210), the system comprising:
a keystroke controller (110) configured to identify a keystroke that represents a character (212-216) of the password entered on the input device (210) and identify further keystrokes representing further characters of the password as long as the further keystrokes related to the password are entered, wherein identifying comprises identifying a tag In a HyperText Markup Language page, the tag having the structure < INPUT Type ='password' >;
a scrambling pad (120) configured to generate a transformation rule (220) in case that no transformation rule has been generated previously and configured to scramble the character (212-216) represented by the identified keystroke Into a scrambled character (222-226) according to the transformation rule (220) and to scramble the further characters Into further scrambled characters according to the transformation rule.

2. The system of claim 1, wherein the transformation rule (220) complies with a restriction for scrambled characters (222-226) of the password.

3. The system of any of the claims 1 to 2, wherein system is stored on a portable storage device.

4. A computer implemented method (300) for scrambling characters of a password for a web based application, the password being entered by a user on an input device (210), the method comprising:
identifying (310) a keystroke that represents a character (212-216) of the password entered on the input device (210) and identifying (350) further keystrokes representing further characters of the password as long as the further keystrokes related to the password are entered, wherein identifying (310, 350) comprises identifying a tag in a HyperText Markup Language page, the tag having the structure < INPUT Type = 'password' >;
generating (360) a transformation rule (220) in case that no transformation rule has been generated previously; and
scrambling (370) the character (212-216) represented by the identified keystroke into a scrambled character (222-226) according to the transformation rule (220) and scrambling (390) the further characters into further scrambled characters according to the transformation rule.

5. The method of claim 4, further identifying a restriction for scrambled characters (222-226) of the password prior to generating (360) the transformation rule (220) and generating (360) the transformation rule (220) so that the restriction is fuifllled.

6. A computer program product comprising instructions that are transferable to a computer system (200) and that cause the computer system (200) to execute the method steps according to any one of the claims 4 to 5.

## Patentansprüche

1. System (100) zum Verwürfeln von Zeichen eines Passworts für eine auf dem web basierende Anwendung, wobei das Passwort von einem Benutzer auf einer Eingabeeinrichtung (210) eingegeben wird, wobei das System Folgendes umfasst:
eine Taatenbetätigunga-Steuerung (110), die dafür ausgelegt ist, eine Tastenbetätigung zu identifizieren, die ein Zeichen (212-216) des auf der Eingabeeinrichtung (210) eingegebenen Passworts repräsentiert, und weitere Tastenbetätigungen zu identifizieren, die weitere Zeichen des Passworts repräsentieren, solange die mit dem Passwort in Beziehung stehenden weiteren Tastenbetätigungen eingegeben werden, wobei das identifizieren umfasst, ein Tag in einer Seite in HyperText Markup Language zu identifizieren, wobei das Tag die Struktur <INPUT Type='password'> aufweist;
ein Verwürfelungs-Pad (120), das dafür ausgelegt ist, eine Transformationsregel (220) zu erzeugen, falls keine Transformationsregel zuvor erzeugt und
konfiguriert wurde, um das durch die identifizierte Tastenbetätigung repräsentierte Zeichen (212-216) gemäß der Transformationsregel (220) zu einem verwürfelten Zeichen (222-226) zu verwürfeln und die weiteren Zeichen gemäß der Transformationsregel zu weiteren verwürfelten Zeichen zu verwürfeln.

2. System nach Anspruch 1, wobei die Transformationsregel (220) einer Einschränkung für verwürfelte Zeichen (222-226) des Passworts gefügt.

3. System nach einem der Ansprüche 1 bis 2, wobei das System auf einer tragbaren Speichereinrichtung gespeichert ist.

4. Computerimplementiertes Verfahren (300) zum Verwürfeln von Zeichen eines Passworts für eine auf dem Web basierende Anwendung, wobei das Passwort von einem Benutzer auf einer Eingabeeinrichtung (210) eingegeben wird, wobei das Verfahren die folgenden Schritte umfasst:
Identifizieren (310) einer Tastenbetätigung, die ein Zeichen (212-216) des auf der Eingabeeinrichtung (210) eingegebenen Passworts repräsentiert, und Identifizieren (350) weiterer Tastenbetätigungen, die weitere Zeichen des Passworts repräsentieren, solange die mit dem Passwort in Beziehung stehenden weiteren Tastenbetätigungen eingegeben werden, wobei das Identifizieren (310, 350) umfasst, ein Tag in einer Seite in HyperText Markup Language zu identifizieren, wobei das Tag die Struktur <INPUT Type='password'> aufweist;
Erzeugen (360) einer Transformationsregel (220),
falls zuvor keine Transformationsregel erzeugt wurde; und
Verwürfeln (370) des durch die identifizierte Tastenbetätigung repräsentierten Zeichens (212-216) zu einem verwürfelten Zeichen (222-226) gemäß der Transformationsregel (220) und Verwürfeln (390) der weiteren Zeichen zu weiteren verwürfelten Zeichen gemäß der Transformationsregel.

5. Verfahren nach Anspruch 4, ferner mit dem Schritt des Identifizierens einer Einschränkung für verwürfelte Zeichen (222-226) des Passworts vor dem Erzeugen (360) der Transformationsregel (220) und des Erzeugens (360) der Transformationsregel (220) dergestalt, dass die Einschränkung erfüllt ist.

6. Computerprogrammprodukt, das Anweisungen umfasst, die auf ein Computersystem (200) übertragbar sind und die bewirken, dass das Computersystem (200) die Verfahrensschritte nach einem der Ansprüche 4 bis 5 ausführt.

## Revendications

1. Système (100) pour embrouiller des caractères d'un mot de passe pour une application Web, le mot de passe étant entré par un utilisateur sur un dispositif d'entrée (210), le système comprenant :
un contrôleur de frappe (110) configuré pour identifier une frappe qui représente un caractère (212 à 216) du mot de passe entré sur le dispositif d'entrée (210) et identifier des frappes complémentaires représentant des caractères complémentaires du mot de passe tant que les frappes complémentaires relatives au mot de passe sont entrées, dans lequel l'identification comprend l'identification d'une balise dans une page de langage de marquage d'hypertexte, la balise ayant la structure < INPUT Type = 'mot de passe'> ;
un clavier de brouillage (120) configuré pour générer une règle de transformation (220) dans le cas où aucune règle de transformation n'a été générée précédemment et configuré pour embrouiller le caractère (212 à 216) représenté par la frappe identifiée dans un caractère embrouillé (222 à 226) selon la règle de transformation (220) et embrouiller les caractères complémentaires dans des caractères complémentaires embrouillés selon la règle de transformation.

2. Système selon la revendication 1, dans lequel la règle de transformation (220) est conforme à une restriction pour les caractères embrouillés (222 à 226) du mot de passe.

3. Système selon l'une quelconque des revendications 1 à 2, dans lequel le système est stocké sur un dispositif de stockage portable.

4. Procédé informatisé (300) pour embrouiller des caractères d'un mot de passe pour une application Web, le mot de passe étant entré par un utilisateur sur un dispositif d'entrée (210), le procédé comprenant :
l'identification (310) d'une frappe qui représente un caractère (212 à 216) du mot de passe entré sur le dispositif d'entrée (210) et l'identification (350) des frappes complémentaires représentant des caractères complémentaires du mot de passe tant que les frappes complémentaires relatives au mot de passe sont entrées, dans lequel l'identification (310, 350) comprend l'identification d'une balise dans une page de langage de marquage d'hypertexte, la balise ayant la structure < INPUT Type = 'mot de passe'> ;
la génération (360) d'une règle de transformation (220) dans le cas où aucune règle de transformation n'a été générée précédemment ; et
l'embrouillage (370) du caractère (212 à 216) représenté par la frappe identifiée dans un caractère embrouillé (222 à 226) selon la règle de transformation (220) et l'embrouillage (390) des caractères complémentaires dans des caractères complémentaires embrouillés selon la règle de transformation.

5. Procédé selon la revendication 4, identifiant en outre une restriction pour les caractères embrouillés (222 à 226) du mot de passe avant la génération (360) de la règle de transformation (220) et générant (360) la règle de transformation (220) de sorte que la restriction est respectée.

6. Produit-programme informatique comprenant des instructions qui sont transférables sur un système informatique (200) et qui amènent le système informatique (200) à exécuter les étapes du procédé selon l'une quelconque des revendications 4 à 5.
